# EUROPEAN PATENT SPECIFICATION

(11) **EP 3 450 929 B1**
(45) Date of publication and mention of the grant of the patent: **19.08.2020**
(21) Application number: 17188477.8
(22) Date of filing: 30.08.2017
(51) Int. Cl.: G01D 18/00

(54) **SYSTEM COMPRISING A SIGNAL ANALYZER AND SENSORS WITH TEST SIGNAL GENERATION**
SYSTEM UMFASSEND EINEN SIGNALANALYSATOR UND SENSOREN MIT TESTSIGNALERZEUGUNG
SYSTÈME COMPRENANT UN ANALYSEUR DE SIGNAUX ET DES CAPTEURS À GÉNÉRATION DE SIGNAL D'ESSAI

(43) Date of publication of application: 06.03.2019
(73) Proprietor: G.R.A.S. Sound & Vibration A/S, 2840 Holte (DK)
(72) Inventor: Baekke, Jørgen, 2950 Vedbaek (DK); Rasmussen, Per, 3070 Snekkersten (DK)
(74) Representative: Schwarz & Partner Patentanwälte OG

(56) References cited:
- US-A1- 2010 292 939
- US-A1- 2014 210 631
- "The IEEE 1451.4 Proposed Standard", March 2001 (2001-03), IEEE INSTRUMENTATION & MEASUREMENT MAGAZINE, IEEE SERVICE CENTER, PISCATAWAY, NJ, US, PAGE(S) 12 - 18, XP011091496, ISSN: 1094-6969 * abstract; figure 1 * * page 13, left-hand column, line 37 - line 51 * * page 14, right-hand column, line 49 - page 15, left-hand column, line 4 * * page 17, left-hand column, line 14 - line 26 *

## Description

### FIELD OF THE INVENTION

The invention relates to a system of at least one sensor and a remote signal analyzer connected to the sensor with at least two wires to transmit in an analogue mode an analogue sensor signal from the sensor to the analyzer and to communicate in a digital mode digital information between sensor and analyzer, which sensor comprises mode switching means to switch between the analogue mode and the digital mode of the sensor.

### BACKGROUND OF THE INVENTION

Prior art systems often comprise a large number of sensors like microphones or vibration sensors mounted in different locations of an area to measure analogue sensor signals, which signals are analyzed in the analyzer to which all sensors are connected. As a result the analyzer provides information about physical parameters like sound or vibration in this area where the sensors are located. These sensors need to be tested from time to time to ensure that all sensor signals are correct and none of the sensors is defect. State of the art provides different approaches to enable such testing of remote sensors.

Document US 4,648,078 describes a remote testing system based on capacitive coupling of a test signal to the input terminal of a sensor element of the sensor. This system comprises the disadvantage that it requires a separate wire between the analyzer and each sensor to transmit the test signal.

EP 2 300 790 B1 describes a system for transmitting a test signal from the analyzer to the remote sensor while simultaneously transmitting the resulting signal back to the analyzer on the same wire. This system comprises the disadvantage that it requires a special control circuit in both the sensor and the analyzer.

A man skilled in the art furthermore is aware of the Standard IEEE 1451.4 for "A Smart Transducer Interface for Sensors and Actuators — Mixed-Mode Communication Protocols and Transducer Electronic Data Sheet". In a system that complies with this Standard IEEE 1451.4 it is possible that the analyzer and the sensors communicate data in a digital mode or the sensor transmit analogue signals in an analogue mode. This communication is realized with a TEDS (Transducer Embedded Data Sheet) circuit and enables to store digital data from the analyzer in the sensor.

US 2014/210631 A1 describes an interconnection verification means for sensors and a software implementation and discloses a system of at least one sensor and a remote signal analyzer connected to the sensor with two wires to transmit in an analogue mode an analogue sensor signal from the sensor to the analyzer and to communicate in a digital mode digital information between sensor and analyzer.

### SUMMARY OF THE INVENTION

It is an object of the invention to provide a system comprising at least one sensor and a remote analyzer that enables testing of the sensors without additional wires and without an additional control circuit in the analyzer. This object is achieved with a system, wherein the sensor comprises processor means configured to process in the analogue mode of the sensor digital analyzer data and special digital analyzer data from the analyzer, which is stored in a sensor memory circuit of the sensor by the analyzer in the digital mode of the sensor and, wherein the processor means comprise a test signal generator to generate a test signal in the analogue mode to test the functionality of the sensor and wherein the processor means are built to switch-on the generation of the test signal in the analogue mode based on the presence of the special digital analyzer data in the sensor memory circuit said presence thus indicating the start of the generation of the test signal.

A system according to the invention comprises the advantage that the infrastructure provided in a system that comprises a TEDS circuit and complies with Standard IEEE 1451.4 may be used to store a test data request in the digital mode of the sensor to request the test of the sensor in a memory space of the TEDS of that sensor. When switching over to the analogue mode of the sensor the additional processor means read the stored test data request and start the generation of a test signal within the sensor from e.g. a D/A-converter of the processor means. This within the sensor generated test signal is fed to a sensor element of the sensor that, if not in test mode, senses the physical parameter to be measured and that provides in test mode a sensor output signal as a response to the test signal which is analyzed either within the sensor or at the analyzer. In case the sensor output signal as a response to the test signal is analyzed within the sensor, then the result is stored as digital sensor data in the TEDS of the sensor and read out by the analyzer in digital mode to decide within that analyzer whether the sensor still works correct or is defect.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system of several sensors connected to a remote analyzer to analyze the analogue sensor signals.
Figure 2 shows the realization of one of the sensors of the system shown in figure 1.

### DETAILED DESCRIPTION OF EMBODIMENTS

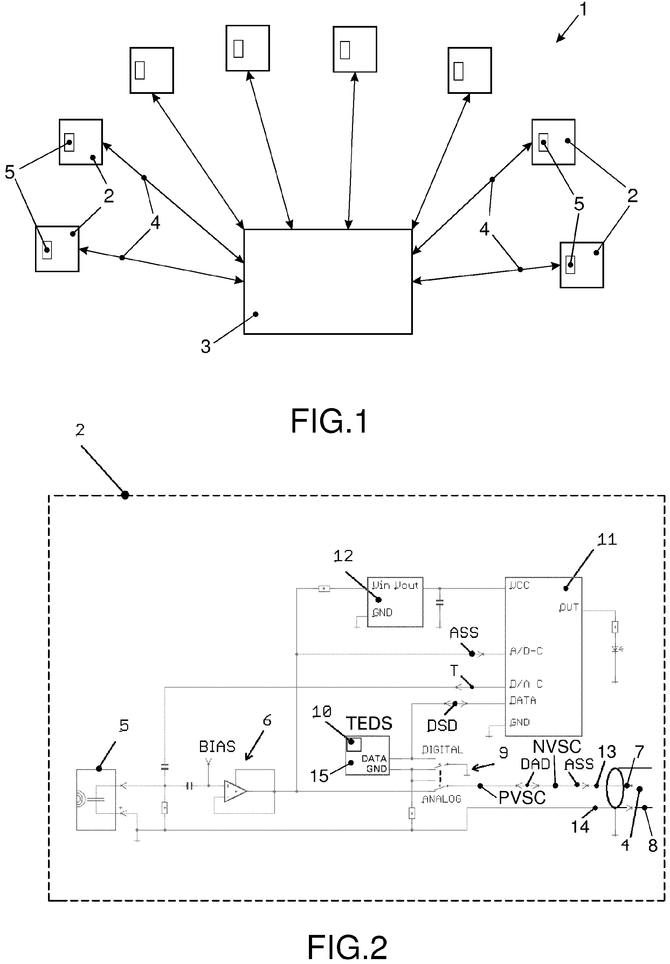

Figure 1 shows a system 1 of eight sensors 2 and a remote signal analyzer 3, wherein each of the sensors 2 is connected with a coax-cable 4 that comprises two wires, a signal wire 7 and a shield wire 8 to connect the sensor 2 with the analyzer 3. Sensors 2 comprise sensor elements 5 that are built as acoustic transducers with a membrane to measure the physical parameter of noise or sound. Sensors 2 of system 1 may for instance be attached on the surface of a wing of a test airplane to sense turbulences and improve the surface of the wing. Other sensors or additional sensors according to other embodiments of the invention could comprise sensor elements built as vibration sensors or temperature sensors or humidity sensors to measure other physical parameters in the area where the sensors 2 are arranged.

Analyzer 3 is built to transfer either a positive voltage supply current PVSC or a negative voltage supply current NVSC through the coax-cable 4 to the sensor element 2. The polarity of the voltage supply current controls a signal mode switch 9 of the sensor 2.

When analyzer 3 transfers the positive voltage supply current PVSC to one of the sensors 2 it will operate in analogue signal mode and each of the sensor elements 5 of the sensors 2 transmits an analogue sensor signal ASS that is superimposed on the supply current wire 7. Analyzer 3 comprises an amplifier and other electronic elements to display the result of the measurements with the sensors 2. When the sensor 2 is switched into the analogue signal mode processor means 11 of sensor 2 are active and can access digital data stored in a sensor memory circuit 10 of the sensor 2. As a result of the digital data stored in the sensor memory circuit 10, processor means 11 in analogue mode of the sensor 2 can generate a test signal T and analyze the analogue sensor signal ASS as a response to the test signal T, what will be explained in more detail below.

When analyzer 3 transfers a negative voltage supply current NVSC to one of the sensors 2, the sensor 2 will operate in digital mode. In this digital mode the sensor 2 can receive and transmit digital analyzer data DAD that are superimposed on the supply current wire 7 and store digital analyzer data DAD into the sensor memory circuit 10, what will be explained in more detail below.

Figure 2 shows the realization of one of the sensors 2 of the system 1 shown in figure 1. The acoustic transducer of sensor element 5 comprises a membrane that forms a capacity that changes with the amount of noise or sound at the membrane. The signal wire 7 of coax-cable 4 is connected to the sensor element 5 via a pre-amplifier 6 and a sensor signal wire 13 to transmit the analogue sensor signal ASS to the analyzer 3. The shield wire 8 of the coax-cable 4 is connected to a ground wire 14 of the sensor 2.

Sensor 2 and analyzer 3 comply with the Standard IEEE 1451.4 to transmit analogue signals and digital data according to the Mixed Mode Communication Protocols. This enables that not only analogue signals may be exchanged over the coax-cable 4 in the analogue mode, but also digital data may be exchanged over the coax-cable 4 in the digital mode. Mode switching means 9 of sensor 2 are realized by a switch that is switched in digital mode when the negative voltage supply current NVSC is supplied to the sensor 2 and switched in analogue mode when the positive voltage supply current PVSC is supplied to the sensor 2. When in digital mode a TEDS circuit 15 in sensor 2 processes this digital communication with an appropriate TEDS circuit in analyzer 3. In digital mode analyzer 3 may transmit or receive digital data stored or to be stored in the sensor memory circuit 10 of TEDS circuit 15 that stores a Transducer Electronic Data Sheet (TEDS) defined in the Standard IEEE 1451.4. A man skilled in the art knows this Standard IEEE 1451.4 and is aware of the different kind of digital data stored in the Transducer Electronic Data Sheet for normal use of the sensor 2.

Sensor 2 according to the invention comprises processor means 11 to process in the analogue mode of the sensor 2 digital analyzer data DAD stored in the digital mode of the sensor 2 in the sensor memory circuit 10. To enable power supply of processor means 11 in analogue mode sensor 2 comprises power means 12 that use the positive voltage supply current PVSC from the analyzer 3 for sensor 2 in analogue mode to generate VCC for processor means 11.

In case analyzer 3 after e.g. a predetermined time duration of several seconds or hours or days or months decides to test one or all sensors 2 connected, then it switches sensor 2 in digital mode and stores a special digital analyzer data DSD in a special memory position of the Transducer Electronic Data Sheet of TEDS in the sensor memory circuit 10. This initializes a test mode in analyzer 3 and sensor 2. The special digital analyzer data DSD e.g. could be "ZZ" stored in a memory position of the sensor memory circuit 10 free for other use in Standard IEEE 1451.4. After this special digital analyzer data DSD have been stored in digital mode in sensor memory circuit 10, analyzer 3 switches sensor 2 to be tested into analogue mode again by providing the positive voltage supply current PVSC to pre-amplifier 6 of sensor 2. In analogue mode processor means 11 are powered by power means 12 and read out the special digital analyzer data DSD at the special memory position in TEDS stored in the sensor memory circuit 10. In case the special data "ZZ" are read out by processor means 11, the generation of a test signal T by processor means 11 is started. This test signal T is provided at the digital analogue converter pin D/A-C of processor means 11 and fed to sensor element 5 to be tested. The sensor output signal as a response to the test signal T is amplified by pre-amplifier 6 and the analogue sensor signal ASS is transmitted via coax-cable 4 to analyzer 3 that analyzes the analogue sensor signal ASS in test mode to decide whether sensor 2 still works as it should.

To finalize test mode and switch-off the test signal T generated by processor means 11, either processor 11 after a predefined period of time turns off and returns to normal analog mode or analyzer 3 switches sensor 2 back in digital mode by providing the negative voltage supply current NVSC to sensor 2. After that analyzer 3 stores other digital analyzer data DAD than the special digital analyzer data DSD = "ZZ" into the special memory position in sensor memory circuit 10 and switches sensor 2 into analogue mode again by providing the positive voltage supply current PVSC to sensor 2. In analogue mode processor means 11 are powered by power means 12 and read out the special memory position in sensor memory circuit 10 and decide to stop the generation of the test signal T, what ends test mode in sensor 2 and analyzer 3.

With this way to test the functionality of sensors 2 connected to analyzer 3 the advantage is achieved that no additional wire is needed to transfer the test signal T from analyzer 3 to sensors 2 to be tested as the test signal T is generated within sensor 2. As the analogue sensor signal ASS as a response of the sensor element 5 in test mode is amplified by pre-amplifier 6 not only sensor element 5, but also pre-amplifier 6 is tested in test mode. Furthermore, the advantage is achieved that there is no need to add further hardware to analyzer 3 to enable a test mode with new sensors 2 that enable the new way of testing. Just a minor software update that enables analyzer 3 to store special digital analyzer data DSD into the special memory position in sensor memory circuit 10 is needed, what eases the implementation.

In a further preferred embodiment of the invention processor means in test mode receive the analogue sensor signal ASS at an analogue to digital converter pin A/D-C and analyze the response of the sensor element 5 and pre-amplifier 6 already within sensor 2. The result of this analyze processed in analogue mode and test mode of sensor 2 could be that sensor 2 works as expected and e.g. a result bit "1" is stored as sensor test result STR in another special memory position of sensor memory circuit 10. On the other hand, if the result of this analyze would be that sensor 2 does not work as expected, then e.g. a result bit "0" would be stored sensor as test result STR in the another special memory position of sensor memory circuit 10. After a testing time of a few milliseconds up to several minutes analyzer 3 would switch back into digital mode by providing the negative voltage supply current NVSC to pre-amplifier 6 and read out the sensor test result STR in sensor memory circuit 10 to display on a display or other predefined action of analyzer 3 which of the tested sensors 2 works correct and which of the tested sensors is defect and needs to be replaced and optionally visual show the test result of sensor 2. In another embodiment of the invention the tested sensors could show their test result by e.g. blinking a red LED light in case they need to be replaced.

This further preferred embodiment comprises the advantage that disturbances on coax-cable 4 have no influence on the result of the test as only the digital bit of the sensor test result STR, but not the analogue sensor signal ASS, has to be transferred over the coax-cable 4.

In a further embodiment of the invention, each sensor is connected with more than two wires with the analyzer. The same advantages are achieved for such a system as no further wires need to be added to enable testing and no additional control circuit needs to be added to the analyzer.

In further embodiment of the invention, the task performed by the analyzer could be to measure temperature or humidity or any other environment parameters in the sensor in analogue mode and to store the results in the sensor memory circuit of TEDS as digital analyzer data DAD to be read out by the remote analyzer in digital mode. The sensor to measure temperature or humidity or any other environment parameter could be either a sensor that provides an analogue sensor signal or digital sensor data, which are stored in analogue mode in the sensor memory circuit of TEDS as digital analyzer data DAD.

The processor means in the sensor are always switched-on when the sensor is switched into analogue mode to read-out the special memory position in TEDS to decide whether or not a test mode should be activated. In a further preferred embodiment of the invention processor means are switched-off in case the test mode is not activated what advantageously reduces the power consumption of the sensor.

It has to be stated that the sensor and the remote signal analyzer could be connected with another cable than a coax-cable as well, which other cable just needs two wires which are electrical isolated from each other.

## Claims

1. System (1) comprising at least one sensor (2) and a remote signal analyzer (3) connected to the sensor (2) with at least two wires (7, 8) to transmit in an analogue mode an analogue sensor signal (ASS) from the sensor (2) to the analyzer (3) and to communicate in a digital mode digital information between sensor (2) and analyzer (3), which sensor (2) comprises mode switching means (9) to switch between the analogue mode and the digital mode of the sensor (2), **characterized in that** the sensor (2) comprises processor means (11) configured to process in the analogue mode of the sensor (2) special digital analyzer data (DSD) and digital analyzer data (DAD) from the analyzer (3), which is stored in a sensor memory circuit (10) of the sensor (2) by the analyzer (3) in the digital mode of the sensor (2) and, wherein the processor means (11) comprise a test signal generator to generate a test signal (T) in the analogue mode to test the functionality of the sensor (2) and wherein the processor means (11) are built to switch-on the generation of the test signal (T) in the analogue mode based on the presence of the special digital analyzer data (DSD) in the sensor memory circuit (10), said presence thus indicating the start of the generation of the test signal (T).

2. System (1) according to claim 1, wherein the sensor (2) comprises a sensor element (5) and a pre-amplifier (6) to transmit the analogue sensor signal (ASS) from the sensor element (5) when the generated test signal (T) is fed to an input of the sensor element (5).

3. System (1) according to claim 1, wherein the sensor (2) comprises a test signal analyzer to analyze the analogue sensor signal (ASS) in the analogue mode when the generated test signal (T) is fed to an input of the sensor element (5) and to store the result as sensor test result (STR) in sensor memory circuit 10 in the sensor (2) to be transmitted as digital analyzer data (DAD) to the remote signal analyzer (3) in digital mode.

4. System (1) according to claim 3, wherein the sensor (2) comprises visualization means to visualize the test result on the sensor (2).

5. System (1) according to any of the claims 1 to 4, wherein the sensor (2) and the analyzer (3) comply to the Standard IEEE 1451.4 to transmit analogue signals and digital data according to the Mixed Mode Communication Protocols.

6. System (1) according to any of the claims 1 to 5, wherein the sensor (2) comprises an acoustic transducer element as sensor element (5).

7. System (1) according to any of the claims 1 to 5, wherein the sensor (2) comprises a vibration transducer element as sensor element (5).

8. System (1) according to any of the claims 1 to 7, wherein the processor means (11) are only active in the analogue mode.

9. System according to any of the claims 1 to 8, wherein the sensor comprises a further sensor element and the processor means are built store digital analyzer data (DAD) based on the analogue sensor signal or digital sensor data of the further sensor element.

## Patentansprüche

1. System (1), umfassend mindestens einen Sensor (2) und einen Fernsignalanalysator (3), der mit dem Sensor (2) über mindestens zwei Drähte (7, 8) verbunden ist, um in einem analogen Modus ein analoges Sensorsignal (ASS) von dem Sensor (2) zu dem Analysator (3) zu übertragen und um in einem digitalen Modus digitale Information zwischen dem Sensor (2) und dem Analysator (3) zu kommunizieren, wobei der Sensor (2) Moduswechselmittel (9) umfasst, um zwischen dem analogen Modus und dem digitalen Modus des Sensors (2) zu wechseln, **dadurch gekennzeichnet, dass** der Sensor (2) Prozessormittel (11) umfasst, die dazu vorgesehen sind, im analogen Modus des Sensors (2) digitale Spezialanalysatordaten (DSD) und digitale Analysatordaten (DAD) von dem Analysator (3) zu verarbeiten, die in einem Sensorspeicherschaltkreis (10) des Sensors (2) von dem Analysator (3) im digitalen Modus des Sensors (2) gespeichert werden, und wobei die Prozessormittel (11) einen Testsignalgenerator umfassen, um ein Testsignal (T) im analogen Modus zu erzeugen, um die Funktionalität des Sensors (2) zu testen, und wobei die Prozessormittel (1) gebaut sind, um die Erzeugung des Testsignals (T) im analogen Modus auf der Grundlage der Gegenwart der digitalen Spezialanalysatordaten (DSD) im Sensorspeicherschaltkreis (10) einzuschalten, wobei die Gegenwart somit den Start der Erzeugung des Testsignals (T) angibt.

2. Sytem (1) gemäß Anspruch 1, wobei der Sensor (2) ein Sensorelement (5) und einen Vorverstärker (6) umfasst, um das analoge Sensorsignal (ASS) von dem Sensorelement (5) zu übertragen, wenn das erzeugte Testsignal (T) zu einem Eingang des Sensorelements (5) zugeführt wird.

3. System (1) gemäß Anspruch 1, wobei der Sensor (2) einen Testsignalanalysator umfasst, um das analoge Sensorsignal (ASS) im analogen Modus zu analysieren, wenn das erzeugte Testsignal (T) zu einem Eingang des Sensorelements (5) zugeführt wird, und das Resultat als ein Sensortestresultat (STR) im Sensorspeicherschaltkreis 10 in dem Sensor (2) zu speichern, das als digitale Analysatordaten (DAD) zu dem Fernsignalanalysator (3) im digitalen Modus zu übertragen ist.

4. System (1) gemäß Anspruch 3, wobei der Sensor (2) Visualisierungsmittel umfasst, um das Testresultat auf dem Sensor (2) zu visualisieren.

5. System (1) gemäß einem der Ansprüche 1 bis 4, wobei der Sensor (2) und der Analysator (3) dem Standard IEEE 1451.4 entsprechen, um analoge Signale und digitale Daten gemäß den Mixed Mode Communication Protocols zu übertragen.

6. System (1) gemäß einem der Ansprüche 1 bis 5, wobei der Sensor (2) ein akustisches Wandlerelement als Sensorelement (5) umfasst.

7. System (1) gemäß einem der Ansprüche 1 bis 5, wobei der Sensor (2) ein Vibrationswandlerelement als Sensorelement (5) umfasst.

8. System (1) gemäß einem der Ansprüche 1 bis 7, wobei die Prozessormittel (11) nur im analogen Modus aktiv sind.

9. System gemäß einem der Ansprüche 1 bis 8, wobei der Sensor ein weiteres Sensorelement umfasst und wobei die Prozessormittel gebaut sind, um digitale Analysatordaten (DAD) auf der Grundlage des analogen Sensorsignals oder digitale Sensordaten des weiteren Sensorelements zu speichern.

## Revendications

1. Système (1) comprenant au moins un capteur (2) et un analyseur de signal à distance (3) connecté au capteur (2) avec au moins deux fils (7, 8) pour transmettre dans un mode analogique un signal de capteur analogique (ASS) du capteur (2) à l'analyseur (3) et pour communiquer dans un mode numérique des informations numériques entre le capteur (2) et l'analyseur (3), lequel capteur (2) comprend des moyens de commutation de mode (9) pour commuter entre le mode analogique et le mode numérique du capteur (2), **caractérisé en ce que** le capteur (2) comprend des moyens de processeur (11) configurés pour traiter dans le mode analogique du capteur (2) des données numériques spéciales d'analyseur (DSD) et des données numériques d'analyseur (DAD) à partir de l'analyseur (3), qui sont stockées dans un circuit de mémoire de capteur (10) du capteur (2) par l'analyseur (3) dans le mode numérique du capteur (2), et dans lequel les moyens de processeur (11) comprennent un générateur de signal de test pour générer un signal de test (T) dans le mode analogique afin de tester la fonctionnalité du capteur (2) et dans lequel les moyens de processeur (11) sont conçus pour activer la génération du signal de test (T) dans le mode analogique sur la base de la présence des données numériques spéciales d'analyseur (DSD) dans le circuit de mémoire de capteur (10), ladite présence indiquant ainsi la début de la génération du signal de test (T).

2. Système (1) selon la revendication 1, dans lequel le capteur (2) comprend un élément de capteur (5) et un préamplificateur (6) pour transmettre le signal analogique de capteur (ASS) depuis l'élément de capteur (5) lorsque le signal de test généré (T) est introduit dans une entrée de l'élément de capteur (5).

3. Système (1) selon la revendication 1, dans lequel le capteur (2) comprend un analyseur de signal de test pour analyser le signal analogique de capteur (ASS) dans le mode analogique lorsque le signal de test généré (T) est introduit dans une entrée de l'élément de capteur (5) et pour stocker le résultat en tant que résultat de test de capteur (STR) dans le circuit de mémoire de capteur 10 dans le capteur (2) pour être transmis en tant que données numériques d'analyseur (DAD) à l'analyseur de signal à distance (3) en mode numérique.

4. Système (1) selon la revendication 3, dans lequel le capteur (2) comprend des moyens de visualisation pour visualiser le résultat de test sur le capteur (2).

5. Système (1) selon l'une quelconque des revendications 1 à 4, dans lequel le capteur (2) et l'analyseur (3) sont conformes à la norme IEEE 1451.4 pour transmettre des signaux analogiques et des données numériques conformément aux protocoles de communication en mode mixte.

6. Système (1) selon l'une quelconque des revendications 1 à 5, dans lequel le capteur (2) comprend un élément transducteur acoustique en tant qu'élément de capteur (5).

7. Système (1) selon l'une quelconque des revendications 1 à 5, dans lequel le capteur (2) comprend un élément transducteur de vibration en tant qu'élément de capteur (5).

8. Système (1) selon l'une quelconque des revendications 1 à 7, dans lequel les moyens de traitement (11) ne sont actifs que dans le mode analogique.

9. Système selon l'une quelconque des revendications 1 à 8, dans lequel le capteur comprend un élément de capteur supplémentaire et les moyens de processeur sont conçus pour stocker des données numériques d'analyseur (DAD) sur la base du signal de capteur analogique ou des données de capteur numériques de l'élément de capteur supplémentaire.
